# EUROPÄISCHE PATENTSCHRIFT

(11) **EP 0 476 238 B1**
(45) Veröffentlichungstag und Bekanntmachung des Hinweises auf die Patenterteilung: **06.09.1995**
(21) Anmeldenummer: 91110155.8
(22) Anmeldetag: 20.06.1991
(51) Int. Cl.: A23G 1/10, A23G 1/04

(54) **Verfahren und Vorrichtung zum kontinuierlichen Conchieren von Schokolademasse**
Process and apparatus for continuous conching of chocolate
Procédé et appareil pour le conchage en continu de masse de chocolat

(30) Priorität: 04.07.1990 DE 4021305
(43) Veröffentlichungstag der Anmeldung: 25.03.1992
(73) Patentinhaber: CALLEBAUT N.V., B-9280 Lebbeke-Wieze (BE)
(72) Erfinder: Callebaut, Frans, B-9420 Bambrugge (BE); Bruyland, Rudy, B-9310 Herdersem/Aalst (BE)
(74) Vertreter: Bolte, Erich, Dipl.-Ing.

(56) Entgegenhaltungen:
- EP-A- 0 287 209
- DE-A- 2 151 992
- DE-A- 2 341 639
- DE-A- 3 629 526
- DE-A- 3 918 813
- DE-A- 3 918 813
- DE-A- 3 918 813
- DE-C- 514 379
- FR-A- 1 567 475
- GB-A- 2 146 140
- VOEDINGSMIDDELEN TECHNOLOGIE, vol. 16, no. 7, March 1983,ZEIST NL pages 23 - 27; J.L.J.M. PALLANDT: 'bedrijfszeker doseren tegenwordig belangrijker dan ooit.'
- VOEDINGSMIDDELEN TECHNOLOGIE, vol. 23, no. 5, March 1990,ZEIST NL P.R.STRIKWERDA: 'pc-gestuurde weegsystemen in opmars'

## Beschreibung

Die Erfindung betrifft ein Verfahren zum kontinuierlichen Conchieren von (Ausgangs-)Schokolademasse in einer Conche, in die Ausgangsmaterial fortlaufend eingefördert und der conchierte Schokolademasse entsprechend fortlaufend entnommen wird. Weiterhin betrifft die Erfindung eine Vorrichtung zum Conchieren der Schokolademasse und zum Abfördern derselben.

Das (trockene) Ausgangsmaterial für die Herstellung von Schokolademasse wird - nach üblichen Vorbehandlungen - in einem Mischbehälter (Conche) über einen längeren Zeitraum innig vermischt. Danach kann die (conchierte) Schokolademasse der weiteren Verarbeitung zugeführt werden. Kontinuierliches Conchieren von Schokolademasse, das heißt der kontinuierliche Betrieb einer Conche mit fortlaufender Zugabe von Ausgangsmaterial und ebenfalls fortlaufender Entnahme der conchierten Schokolademasse, ist bereits bekannt. In der DE-A-39 18 813, welche die Merkmale des Oberbegriffs des Anspruchs 1 offenbart, wird vorgeschlagen, mehrere, nämlich drei Conchen im Durchlaufbetrieb miteinander zu verbinden. Das Ausgangsmaterial wird in eine erste, das teilweise conchierte Material in eine zweite und schließlich in eine dritte Conche gefördert. Aus dieser wird dann die fertig conchierte Schokolademasse abgefördert.

Als Förderorgan für die teilweise bzw. fertig conchierte Schokolademasse dienen bei diesem bekannten Vorschlag Förderschnecken. Jede Conche bildet einen seitlichen, oberen Überlauf. An diesen schließt jeweils eine Förderschnecke an. Die der ersten und zweiten Conche zugeordneten Förderschnecken transportieren die Schokolademasse jeweils zur (oberen) Eintrittsseite der nächstfolgenden Conche. Für die in der Folge dritte bzw. letzte Conche dient die Förderschnecke zum Abfördern der fertig conchierten Schokolademasse.

Verfahren und Einrichtungen zum kontinuierlichen Conchieren von Schokolademasse haben sich in der Praxis bisher nicht durchsetzen können. Der Grund hierfür liegt darin, daß Probleme bei der Einhaltung einer stets konstanten Menge der Schokolademasse in der Conche auftreten. Des weiteren ist der Abtransport der conchierten Schokolademasse bei den bekannten Lösungen bisher unzulänglich.

Der Erfindung liegt demnach die Aufgabe zugrunde, das kontinuierliche Conchieren von Schokolademasse weiterzuentwickeln und zu verbessern. Insbesondere sollen Maßnahmen vorgeschlagen werden, durch die eine optimale Durchmischung der Bestandteile der Schokolademasse in der Conche bei kontinuierlicher Betriebsweise gewährleistet ist.

Zur Lösung dieser Aufgabe besteht das erfindungsgemäße Verfahren darin, daß die Menge des zugeführten Ausgangsmaterials und/oder die Menge der entnommenen, conchierten Schokolademasse festgestellt werden, insbesondere durch Wägen und daß die Zufuhr von Ausgangsmaterial und/oder die Menge der entnommenen conchierten Masse danach gesteuert wird bzw. werden.

Der Erfindung liegt die Erkenntnis zugrunde, daß die komplexen Zusammenhänge beim Conchieren von Schokolademasse nur dann beherrscht werden, wenn die (ständig) in der Conche vorhandene Menge der Schokolademasse möglichst genau bemessen ist. Dies bedeutet, daß die Zufuhr des Ausgangsmaterials sowie die abgeförderte Menge der conchierten Schokolademasse exakt dosiert sein müssen, um Schwankungen hinsichtlich des Inhalts der Conche zu vermeiden.

Der Austrag der conchierten Schokolademasse aus der Conche erfolgt bei dem erfindungsgemäßen Verfahren und der Vorrichtung durch Zwangsfördern, insbesondere mittels Förderschnecke. Der Antrieb bzw. die Förderleistung der Förderschnecke werden dabei so gesteuert, daß bei vorgegebener Zufuhr von Ausgangsmaterial die Menge der Schokolademasse in der Conche konstant ist.

Zweckmäßigerweise werden sowohl das zugeführte Ausgangsmaterial als auch die entnommene conchierte Schokolademasse fortlaufend bzw. taktweise gemessen und danach der Austrag der conchierten Schokolademasse und/oder die Menge des zugeführten Ausgangsmaterials dosiert.

Die Menge der aus der Conche abgeförderten Schokolademasse kann erfindungsgemäß durch Wägen festgestellt und danach der Förderantrieb der Förderschnecke zeitweilig bzw. taktweise unterbrochen werden. Der abzufördernden Sollmenge an Schokolademasse kann eine bestimmte Zeiteinheit zugrundegelegt werden. Innerhalb derselben erfolgt nach Maßgabe der festgestellten Austragsmenge ein gegebenenfalls mehrmaliges Abschalten des Förderantriebs der Förderschnecke, so daß die Sollmenge während einer Zeiteinheit exakt eingehalten wird. Die Menge des zugeführten Ausgangsmaterials kann dabei durch entsprechende Dosierung konstant gehalten oder ebenfalls fortlaufend bzw. taktweise gemessen werden.

Die Erfindung befaßt sich weiterhin mit einer optimalen Durchmischung der Schokolademasse. Gemäß einem weiteren Merkmal ist deshalb außerhalb der Conche, insbesondere im Anschluß an die Förderschnecke, eine Mischvorrichtung angeordnet. Diese ist erfindungsgemäß mit der Förderschnecke verbunden, so daß die Schokolademasse von der Conche über die Förderschnecke unmittelbar in die in einem langgestreckten, zylindrischen Gehäuse untergebrachte Mischvorrichtung gelangt. In der Mischvorrichtung wird die Schokolademasse bis zur Pumpfähigkeit durchmischt.

Weitere Merkmale der Erfindung betreffen die Ausbildung der Conche, insbesondere zum gesicherten Abfördern der conchierten Schokolademasse sowie die Ausbildung der Förderschnecke und der Mischvorrichtung.

Ausführungsbeispiele der Erfindung werden nachfolgend anhand der Zeichnungen näher erläutert. Es zeigt:

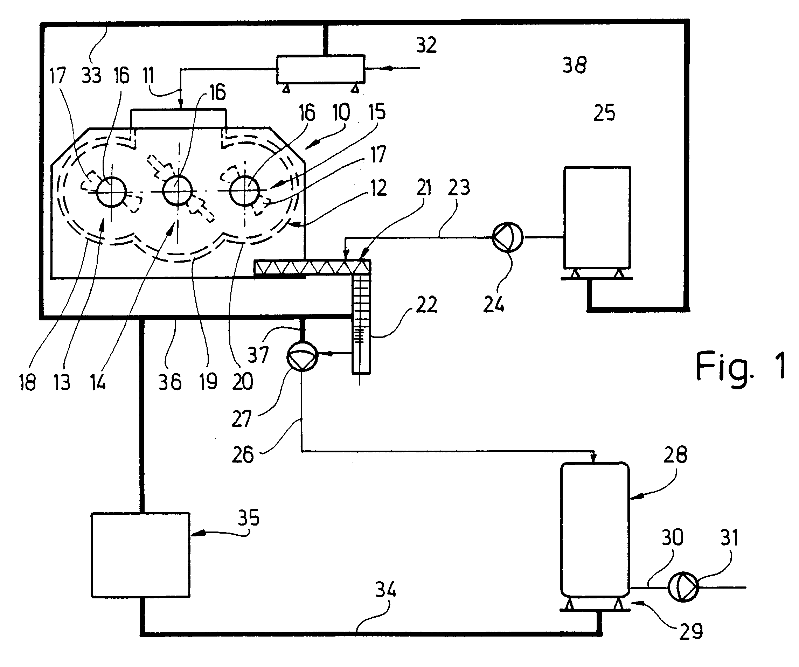

- Fig. 1: einen schematischen Plan einer Anlage zum kontinuierlichen Conchieren von Schokolademasse,

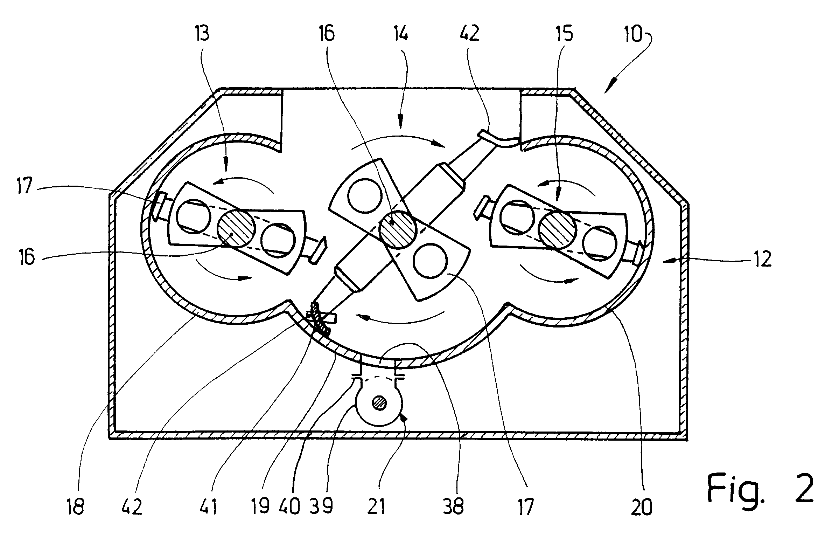

- Fig. 2: einen Querschnitt durch eine Conche,
- Fig. 3: einen randseitigen Bereich der Conche gemäß Fig. 2 im Grundriß,

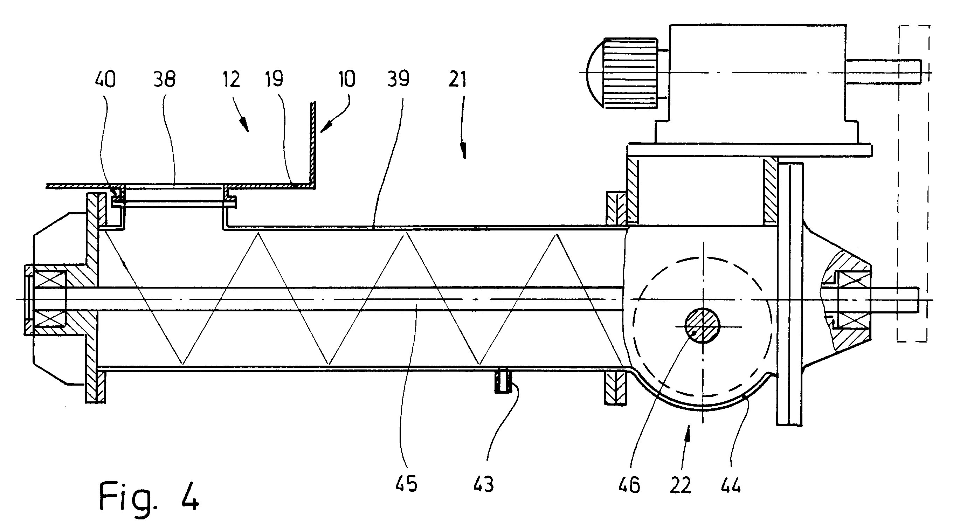

- Fig. 4: einen Zwangsförderer, nämliche eine Förderschnecke in Verbindung mit einer Conche im Längsschnitt,

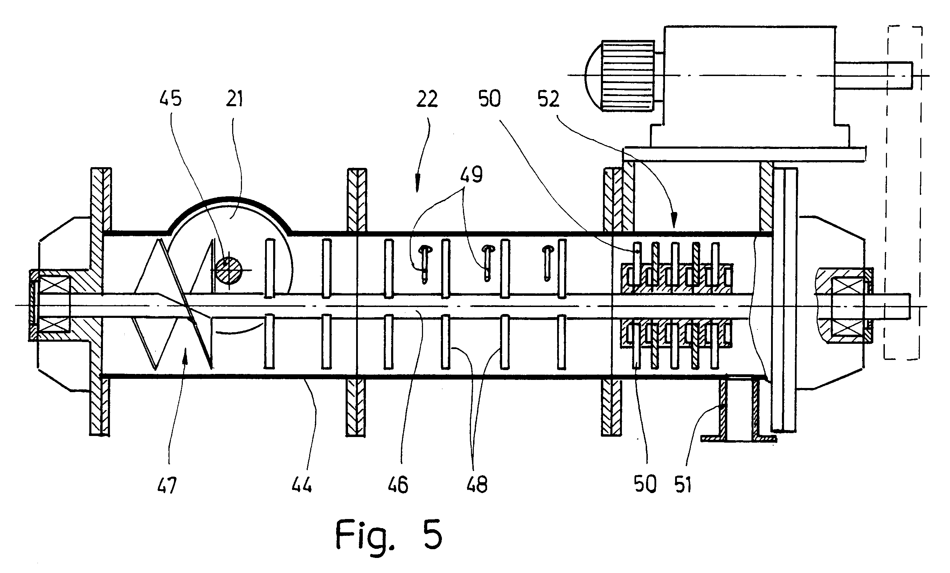

- Fig. 5: eine Mischvorrichtung im Anschluß an die Förderschnecke, ebenfalls im Längsschnitt,

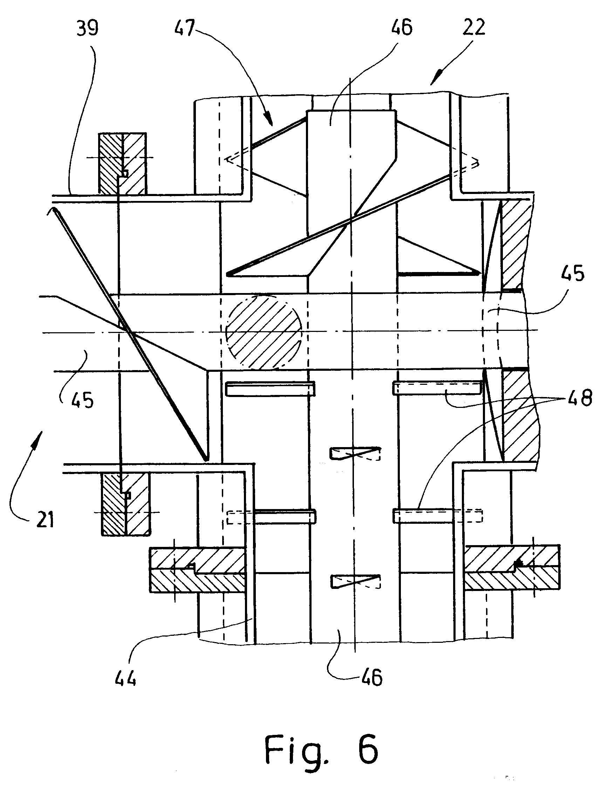

- Fig. 6: einen Kreuzungsbereich von Förderschnecke und Mischvorrichtung als Einzelheit im Grundriß bzw. Horizontal schnitt.

Bei dem gezeigten Ausführungsbeispiel wird Ausgangsmaterial in einer einzigen Conche 10 von im wesentlichen herkömmlicher Bauart durchmischt, nämlich conchiert. Das (trockene) Ausgangsmaterial gelangt nach üblicher Vorbehandlung über einen Zuförderer 11, (z.B. einen Bandförderer) in die Conche 10. Die Einführung des Ausgangsmaterials erfolgt an der Oberseite der oben weitgehend offenen Conche 10, und zwar im Bereich eines Stirnendes.

Die Conche 10 besteht aus einem Conchenbehälter 12, in dem ein Rührwerk zum intensiven Conchieren der (trockenen) Schokolademasse angeordnet ist. Bei dem vorliegenden Ausführungsbeispiel sind in dem Conchenbehälter 12 drei umlaufende Rotoren 13, 14 und 15 angeordnet. Diese sind mit achsparallelen Rotorwellen 16 innerhalb des Conchenbehälters 12 drehbar gelagert. Auf der Rotorwelle 16 sind geeignete, im Prinzip bekannte Flügel 17 angeordnet. Den Rotoren 13, 14, 15 ist innerhalb des Conchenbehälters 12 ein Arbeitsbereich zugeordnet. Der Conchenbehälter 12 ist demnach in drei teilzylindrische Behälterbereiche 18, 19, 20 unterteilt, jeweils einem Rotor 13, 14, 15 zugeordnet.

Die conchierte Schokolademasse wird im unteren Bereich fortlaufend der Conche 10 entnommen, und zwar durch einen Zwangsförderer, nämlich durch eine Förderschnecke 21. Diese transportiert die conchierte Schokolademasse bei dem vorliegenden Ausführungsbeispiel in eine schneckenartige Mischvorrichtung 22 zum (weiteren) innigen Durchmischen der Schokolademasse. Im Bereich der Förderschnecke 21 wird über eine Lecithin-Leitung 23 mit Pumpe 24 aus einem Lecithin-Behälter 25 Lecithin in die conchierte Schokolademasse eingegeben. Die Mischvorrichtung 22 bewirkt eine innige Durchmischung mit der Schokolademasse. Des weiteren kann im Bereich der Förderschnecke 21 Kakaobutter zugegeben werden.

Die (lecithinhaltige) Schokolademasse wird aus der Mischvorrichtung 22 über eine Förderleitung 26 mit Pumpe 27 abgefördert, und zwar in einen Meßbehälter. Bei diesem handelt es sich im vorliegenden Falle um einen Waage-Behälter 28 einer Waage 29 zum Bestimmen der abgeförderten Menge an Schokolademasse. Aus dem Waage-Behälter 28 wird die Schokolademasse über eine Leitung 30 mit Pumpe 31 der weiteren Verarbeitung zugeführt.

Eine Besonderheit der vorliegenden Einrichtung besteht darin, daß die Mengen der behandelten Materialien fortlaufend bzw. taktweise festgestellt und danach der Betrieb der Anlage gesteuert wird. Es wird davon ausgegangen, daß die Conche 10 ununterbrochen arbeitet, und zwar mit konstanten Drehgeschwindigkeiten der Rotoren 13, 14, 15. Es geht darum, innerhalb der Conche 10 stets gleichbleibende Bedingungen zu schaffen. Zu diesem Zweck soll die sich innerhalb der Conche 10 bzw. im Conchenbehälter 12 befindende Menge der Schokolademasse konstant bleiben.

Bei dem vorliegenden Ausführungsbeispiel ist im Bereich des Zuförderers 11 ein Meßaggregat zur Bestimmung der Menge des zugeführten Ausgangsmaterials angeordnet, im vorliegenden Falle eine Bandwaage 32. Diese ermittelt fortlaufend die Menge des zum Conchenbehälters 12 transportierten Ausgangsmaterials.

Weiterhin wird die Menge der abgeförderten, conchierten Schokolademasse ermittelt, und zwar ebenfalls durch Wägen, nämlich mit der Waage 29 und dem Waage-Behälter 28. Bandwaage 32 und Waage 29 sind über Steuerleitungen 33 und 34 mit einer (elektronischen) Steuereinheit 35 geeigneter Bauart verbunden. Diese steuert nach Maßgabe der Mengen- bzw. Gewichtsmessung über Steuerleitungen 36 und 37 die Förderschnecke 21 bzw. die Mischvorrichtung 22 derart, daß deren Förderleistung verändert bzw. zeitweilig unterbrochen wird. Entsprechend wird auch die Förderleistung der Pumpe 27 reduziert bzw. abgeschaltet. Eine weitere Steuerleitung 38 führt zum Lecithin-Behälter 25 bzw. zu einer Dosiereinrichtung (Waage) derselben, so daß nach Maßgabe der Fördermenge der Förderschnecke 21 die Zugabe von Lecithin in angepaßter Weise verändert bzw. unterbrochen werden kann.

Der Betrieb der Conche 10, nämlich Zuführung und Austrag der Materialien, kann mit der vorliegenden Einrichtung vorteilhafterweise so gesteuert werden, daß eine konstante Menge des Ausgangsmaterials fortlaufend über den Zuförderer 11 in die Conche 10 gefördert wird. Die durch die Förderschnecke 21 entnommene Menge der conchierten Schokolademasse wird fortlaufend oder in Zeitabständen durch die Waage 29 ermittelt. Der Austrag der Schokolademasse wird danach so gesteuert, daß die abgeförderte Menge in Übereinstimmung ist mit der Menge des zugeförderten Ausgangsmaterials. Dabei wird zweckmäßigerweise der Förderantrieb der Förderschnecke 21 sowie der Mischvorrichtung 22 zeitweilig unterbrochen. Dies bedeutet, daß die Förderschnecke 21 auf eine höhere Leistung als der zugeförderten Menge des Ausgangsmaterials entsprechend ausgelegt ist.

Bei einem Beispiel wird die Conche 10 mit 1500 kg/h an Ausgangsmaterial beschickt. Entsprechend ist die abzuziehende Menge an conchierter Schokolademasse. Während einer Stunde Betriebsdauer sind demnach 1500 kg durch die Förderschnecke 21 abzuziehen. Während einer Phase von z.B. 20 min sind 500 kg abzuziehen. Die Leistung des Schneckenförderers 21 ist so ausgelegt, daß während einer kürzeren Phase diese Fördermenge erreicht ist und dann für eine Dauer von z.B. 5 min die Förderschnecke abgeschaltet wird. Gleichermaßen wird während der weiteren Zeittakte von 20 min (einer Zeiteinheit von einer Stunde) eine Abschaltdauer von bis zu 5 min nach Maßgabe der Förderdauer für die je Zeittakt abzuziehende Menge (500 kg) für den Zwangsförderer vorgesehen.

Die Anpassung der abgeförderten Menge an Schokolademasse an die Zufuhr von Ausgangsmaterial kann auch auf andere Weise erfolgen, z.B. durch Reduzieren der Förderleistung der durchgehend angetriebenen Förderschnecke 21, also durch Vermindern der Drehzahl.

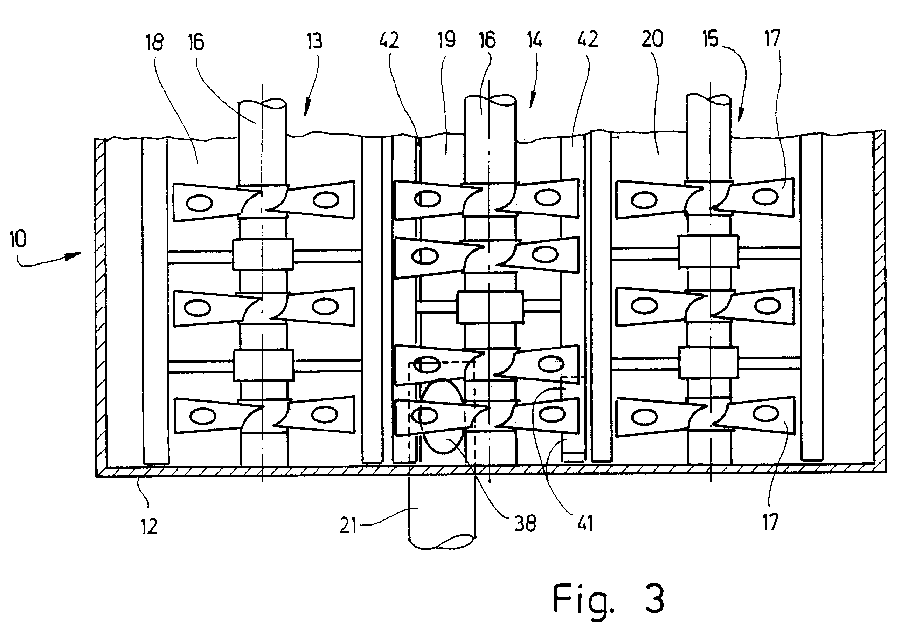

Ein wichtiges Thema ist die konstante, wirksame Entnahme der Schokolademasse aus der Conche 10 mit Hilfe der Förderschnecke 21. Die Conche 10 bzw. deren Conchenbehälter 12 ist im Bereich des mittleren Behälterbereichs 19, der den größten Durchmesser aufweist, mit einer Austrittsöffnung 38 versehen. Die Öffnung ist langgestreckt, insbesondere oval (Fig. 3). Sie erstreckt sich mit ihrer längeren Achse in Richtung achsparallel zum (teilzylindrischen) Behälterbereich 19. Des weiteren befindet sich die Austrittsöffnung 38 geringfügig außermittig, also versetzt zur mittig gelagerten Rotorwelle 16 des Rotors 14. Schließlich ist die Austrittsöffnung 38 so angeordnet, daß sie sich diametral gegenüberliegend zur Einfüllseite für das Ausgangsmaterial befindet.

Die Förderschnecke 21 bzw. ein Schneckengehäuse 39 derselben ist mit der Austrittsöffnung 38 verbunden, derart, daß sich die Förderschnecke 21 in Richtung achsparallel zu den Rotoren 13, 14, 15 erstreckt. Behälterbereich 19 und Schneckengehäuse 39 sind über eine Flanschverbindung 40 mit äußerst kurzen Rohrstutzen miteinander verbunden.

Aufgrund besonderer Maßnahmen ist sichergestellt, daß das conchierte Material zuverlässig in die Austrittsöffnung 38 und damit in die Förderschnecke 21 gelangt. Zu diesem Zweck läuft im (mittleren) Behälterbereich 19 ein besonders ausgebildetes Förderorgan um. Dieses besteht aus einem Fördersteg 41, der an der Innenseite der Wandung des Behälterbereichs 19 entlangläuft. Die Bewegungsbahn des Förderstegs 41 ist so gewählt, daß dieser bei jeder Umdrehung über die Austrittsöffnung 38 hinwegläuft. Durch die Gestaltung des Förderstegs 41 wird gewährleistet, daß dabei Schokolademasse in die Austrittsöffnung 38 eingefördert wird.

Beim vorliegenden Ausführungsbeispiel ist der Fördersteg 41 als schräg zur Wandung des Conchenbehälters 12 gerichtetes Flachprofil ausgebildet, dessen vorzugsweise angeschärfte, der Wandung des Conchenbehälters 12 zugekehrte Kante in Bewegungsrichtung nach rückwärts weist. Es entsteht dadurch eine keilförmige Relativstellung des Förderstegs 41, wodurch die Förderwirkung gewährleistet ist: Die Schokolademasse wird in die Austrittsöffnung 38 gedrückt.

Beim vorliegenden Ausführungsbeispiel ist der Fördersteg 41 Teil, nämlich Abschnitt, von Schabern 42, die mit den Rotoren 13, 14, 15 umlaufen und mit einer angeschärften Kante an der Mantelfläche des Conchenbehälters 12 entlanggleiten. Der Fördersteg 41 ist hier mit dem gleichen Profil ausgebildet, jedoch mit entgegengesetzter Relativstellung, so daß statt einer Schabewirkung die beschriebene Förderwirkung erzeugt wird.

Die conchierte Schokolademasse wird durch die Förderschnecke 21 der Mischvorrichtung 22 zugeführt. Im Bereich der Förderschnecke wird Lecithin über die Lecithin-Leitung 23 zugegeben. Diese schließt vorzugsweise über einen Leitungsstutzen 43 an der Unterseite der Förderschnecke 21 an. Es kann Kakaobutter in diesem Bereich zugegeben werden.

Die an die Förderschnecke 21 anschließende Mischvorrichtung 22 ist quer zur Förderschnecke 21 gerichtet. Das Schneckengehäuse 39 geht im Kreuzungsbereich über in ein Mischergehäuse 44. Auch dieses ist hier zylindrisch ausgebildet.

Förderschnecke 21 und Mischvorrichtung 22 sind versetzt zueinander angeordnet bzw. deren Wellen, nämlich Schneckenwelle 45 und Mischerwelle 46. Die Mischerwelle 46 erstreckt sich unmittelbar unterhalb der Schneckenwelle 45. Dadurch können die vorgenannten Wellen aneinander vorbeigeführt und außerhalb von Schneckengehäuse 39 sowie Mischergehäuse 44 gelagert werden.

Die Mischvorrichtung 22 ist schneckenartig ausgebildet, also mit Förderwirkung in Achsialrichtung. Im Eintrittsbereich, also benachbart zur Förderschnecke 21, ist ein Schneckenabschnitt 47 gebildet. Dieser bewirkt, daß die in das Mischergehäuse 44 eintretende Schokolademasse quer zur Zuförderrichtung innerhalb des Mischergehäuses 44 weitergefördert wird. Der Schneckenabschnitt 47 ist versetzt zum Austrittsende der Förderschnecke 21 angeordnet. Ein erster Mischbereich der Mischvorrichtung besteht aus radialgerichteten Mischwerkzeugen, nämlich Stangen 48. Diese sind in Umfangsrichtung und in Längsrichtung verteilt angeordnet. Die Stangen 48 wirken zusammen mit Gegenwerkzeugen, nämlich Gegenstangen 49, die an der Innenseite des Mischergehäuses 44 angebracht sind.

An diesen ersten Mischbereich schließt ein Bereich besonders intensiver Mischung an, nämlich ein Homogenisator 52 mit zusammenwirkenden Mischlamellen 50. Die Mischvorrichtung 22 bzw. die Mischerwelle 46 wird mit hoher Geschwindigkeit angetrieben, z.B. mit 2200 U/min. Der Förderablauf ist so bemessen, daß die Verweilzeit der Schokolademasse (mit Lecithin) in der Mischvorrichtung 22 etwa 1 min beträgt.

In einem hier anschließenden, von Mischorganen freien Bereich wird die Schokolademasse abgefördert, und zwar durch einen an der Unterseite des Mischergehäuses 44 anschließenden Austrittsstutzen 51. Mit diesem ist die bereits beschriebene Förderleitung 26 verbunden.

## Patentansprüche

1. Verfahren zum kontinuierlichen Conchieren von Schokolademasse in einer Conche, in die Ausgangsmaterial fortlaufend eingefördert und der conchierten Schokolademasse entsprechend forlaufend entnommen wird, **dadurch gekennzeichnet**, daß die Menge des zugeführten Ausgangsmaterials und/oder die Menge der entnommenen conchierten Schokolademasse festgestellt werden, insbesondere durch Wägen und daß die Zufuhr von Ausgangsmaterial und/oder die Menge der entnommenen conchierten Schokolademasse danach derart gesteuert wird bzw. werden, daß die Menge der Schokolademasse in der Conche konstant ist.

2. Verfahren nach Anspruch 1, dadurch gekennzeichnet, daß lediglich die Menge der entnommenen Schokolademasse festgestellt wird, insbesondere durch Wägen und daß danach die Zufuhr von Ausgangsmaterial gesteuert wird.

3. Verfahren nach Anspruch 1, dadurch gekennzeichnet, daß eine konstante Menge an Ausgangsmaterial insbesondere kontinuierlich zugefördert, die dem entsprechend entnommene Menge der conchierten Schokolademasse gemessen und danach die insbesondere kontinuierliche Entnahmeleistung gesteuert wird.

4. Verfahren nach einem der Ansprüche 1 bis 3, dadurch gekennzeichnet, daß die conchierte Schokolademasse durch ein fortlaufend förderndes Zwangsförderorgan, insbesondere durch eine Förderschnecke (21) abförderbar ist, deren Antrieb nach Maßgabe der gemessenen Austragsmenge an conchierter Schokolademasse gesteuert wird.

5. Verfahren nach Anspruch 4, dadurch gekennzeichnet, daß die maximale Förderleistung der Förderschnecke (21) größer ist als de Menge des fortlaufend bzw. während einer Zeiteinheit zugeführten Ausgangsmaterials und daß der Antrieb der Förderschnecke (21) derart steuerbar ist, daß die Gesamtförderleistung während einer Zeiteinheit der zugeführten Menge an Ausgangsmaterial entspricht.

6. Verfahren nach Anspruch 1, dadurch gekennzeichnet, daß bei Zufuhr einer vorgegebenen Menge an Ausgangsmaterial je Zeiteinheit der Materialausgang in dieser Zeiteinheit jeweils innerhalb mehrerer Bruchteile der Zeiteinheit gemessen und der Austrag entsprechend der Messung jeweils kurzzeitig unterbrochen wird, derart, daß der Gesamtaustrag je Zeiteinheit der zugeführten Menge an Ausgangsmaterial entspricht.

7. Verfahren nach Anspruch 1, dadurch gekennzeichnet, daß die aus der Conche (10) abgeförderte conchierte Schokolademasse in einen Meßbehälter förderbar ist, insbesondere in einen Waage-Behälter (28), zur Feststellung der abgeförderten Menge, wobei der Meßbehälter bzw. eine Waage (29) desselben über Steuerleitungen (34, 36) mit dem Abförderer, insbesondere mit der Förderschnecke (21), verbunden ist.

8. Verfahren nach Anspruch 1 sowie einem oder mehreren der weiteren Ansprüche, dadurch gekennzeichnet, daß Lecithin und gegebenenfalls Kakaobutter der conchierten Schokolademasse nach dem Austritt aus der Conche (10) zugegeben wird, insbesondere im Bereich der Förderschnecke (21).

9. Vorrichtung zum innigen Vermischen, nämlich Conchieren, von Bestandteilen zur Herstellung von Schokolademasse in einem Conchenbehälter (12) mit wenigstens einem umlaufenden Rühr- bzw. Mischwerk, wobei das zu vermischende bzw. zu conchierende Ausgangsmaterial durch einen Zuförderer (11) oben in den offenen Conchenbehälter (12) einförderbar und die durchmischte bzw. conchierte Schokolademasse im unteren Bereich abförderbar ist, gekennzeichnet durch folgende Merkmale:
a) Die conchierte Schokolademasse ist vorzugsweise kontinuierlich durch einen Zwangsförderer, insbesondere durch eine Förderschnecke (21), aus dem Conchenbehälter (12) abförderbar,
b) der Zwangsförderer ist über eine Austrittsöffnung (38) im unteren Bereich des zylindrisch ausgebildeten Conchenbehälters (12) an diesen angeschlossen,
c) Mittel die es ermöglichen, daß die durch den Zwangsförderer aus den Conchenbehälter (12) abgeförderte Menge an Schokolademasse der durch den Zuförderer (11) zugeförderten Menge an Ausgangsmaterial entspricht.

10. Vorrichtung nach Anspruch 9, dadurch gekennzeichnet, daß innerhalb des Behälters ein vorzugsweise mit dem Rühr- bzw. Mischwerk umlaufendes Förderorgan angeordnet ist, welches die conchierte Schokolademasse in die Austrittsöffnung (38) zur Förderschnecke (21) transportiert.

11. Vorrichtung nach Anspruch 10, dadurch gekennzeichnet, daß das Förderorgan einen schräg zur Mantelfläche der Conche (10) gerichteten Fördersteg (41) aufweist, durch den die Masse infolge der Drehbewegung in die Austrittsöffnung (38) förderbar und drückbar ist.

12. Vorrichtung nach Anspruch 11, dadurch gekennzeichnet, daß der Fördersteg (41) als Abschnitt eines lamellenförmigen bzw. stegförmigen Schabers (42) ausgebildet ist, der mit dem Rührwerk, insbesondere einem Rotor (14), an der Innenseite des Behältermantels entlang läuft, wobei sich der Fördersteg (41) im Bereich der Austrittsöffnung (38) befindet und diese überstreicht.

13. Vorrichtung nach einem der Ansprüche 9 bis 12, gekennzeichnet durch eine an die Förderschnecke (21) vorzugsweise von unten anschließende Zuleitung, insbesondere eine Lecithin-Leitung (23) für Lecithin und/oder Kakaobutter.

14. Vorrichtung nach einem der Ansprüche 9 bis 13, dadurch gekennzeichnet, daß die durch die Förderschnecke (21) abtransportierte conchierte Schokoladenmasse in einen Meßbehälter zur Feststellung der abgeförderten Menge transportierbar ist, insbesondere in einen Waage-Behälter (28), wobei nach Maßgabe der gemessenen Menge der Antrieb der Förderschnecke (21) und die Zuführung von Lecithin bzw. Kakaobutter steuerbar ist.

15. Vorrichtung nach einem der Ansprüche 9 bis 14, dadurch gekennzeichnet, daß die conchierte Schokoladenmasse durche die Förderschnecke (21) in eine Mischvorrichtung (22) transportierbar ist zur Durchmischung von conchierter Masse mit Lecithin und /oder Kakaobutter.

16. Vorrichtung nach Anspruch 15, dadurch gekennzeichnet, daß die Mischvorrichtung (22) in einem quer zur Förderschnecke (21) angeordneten, zylindrischen Mischergehäuse (44) angeordnet ist und die conchierte Masse in Längsrichtung durch das Mischergehäuse (44) hindurchförderbar ist.

17. Vorrichtung nach Anspruch 16, dadurch gekennzeichnet, daß an die Mischvorrichtung (22) in Förderrichtung der Schokolademasse ein Intensiv-Mischer, nämlich ein Homogenisator (52) anschließt, vorzugsweise innerhalb des gemeinsamen Mischergehäuses (44).

18. Vorrichtung nach Anspruch 15, dadurch gekennzeichnet, daß die im wesentlichen aus radialen Flügeln, Stangen (48) und Fingern auf einer Mischerwelle (48) bestehende Mischvorrichtung (22) und der aus querachsial gerichteten Lamellen- bzw. Scheiben mit geringem Abstand voneinander bestehende Intensiv-Mischer, insbesondere Homogenisator (52), auf einer gemeinsamen Mischerwelle (46) gelagert sind.

19. Vorrichtung nach Anspruch 16, dadurch gekennzeichnet, daß das Gehäuse der Förderschnecke (21), nämlich ein Schneckengehäuse (39), und das Mischergehäuse (44) miteinander zu einem gemeinsamen Gehäuse verbunden sind, wobei die Achsen von Förderschnecke (21) und Mischerwelle (44) einander mit Abstand voneinander kreuzen bzw. versetzt zueinander verlaufen.

20. Vorrichtung nach einem der Ansprüche 9 bis 19, dadurch gekennzeichnet, daß die Austrittsöffnung (38) im Mantel der Conche (10) bzw. des Conchenbehälters (12) langgestreckt, insbesondere oval ausgebildet ist und sich mit ihrer Längsachse achsparallel zu den Rotoren (13, 14, 15) der Conche (10) und in Längsrichtung der Förderschnecke (21) erstreckt.

## Claims

1. A process for continuously conching chocolate mass in a conche, into which starting material is continuously fed and from which, correspondingly, conched chocolate mass is continuously discharged, characterized in that the quantity of the starting material fed into the conche and/or the quantity of the chocolate discharged from the conche are determined especially by weighing, and in that the infeed of starting material and/or the quantity of the correspondingly discharged chocolate mass is or are controlled such that the quantity of chocolate mass in the conche is constant.

2. The process as claimed in claim 1, characterized in that only the quantity of the discharged chocolate mass is determined especially by weighing, and that the infeed of starting material is controlled accordingly.

3. The process as claimed in claim 1, characterized in that a constant quantity of starting material is fed in, especially continuously, the correspondingly discharged quantity of conched chocolate mass is measured, and the discharge capacity is controlled accordingly.

4. The process as claimed in one of claims 1 to 3, characterized in that conched chocolate mass is discharged by means of a continuously conveying compulsory conveyor, especially by means of a screw conveyor (21), whose drive is controlled in response to the determined quantity of discharged chocolate mass.

5. The process as claimed in claim 4, characterized in that the maximum conveying capacity of the screw conveyor (21) is greater than the quantity of the starting material which is fed continuously or for a unit of time, and in that the drive of the screw conveyor (21) is controlled in such a way that the overall conveying capacity during a unit of time corresponds to the quantity of starting material fed into said conche.

6. The process as claimed in claim 1, characterized in that, in the case of an infeed of a predefined quantity of starting material per unit of time, the material discharge during this unit of time is measured in each case in a plurality of fractions of said unit of time, and wherein, in response to the measurement, the discharge is in each case interrupted for a short time, such that the overall discharge per unit of time corresponds to the quantity of starting material fed into said conche.

7. The process as claimed in claim 1, characterized in that the conched chocolate mass discharged from the conche (10) can be conveyed in a measuring vessel, especially into a weighing vessel (28), for determining the discharge quantity, said measuring vessel or a balance (29) thereof being connected to the discharge conveyor, especially to the screw conveyor, via control lines (34, 36).

8. The process as claimed in claim 1 and one or more of the further claims, characterized in that lecithin and, if required, cocoa butter are added to the conched chocolate mass, especially in the region of the conveying screw (21), after said mass has left the conche (10).

9. An apparatus for intimately mixing, specifically conching, ingredients for producing chocolate mass in a conche vessel (12) having at least one rotating agitator or mixer, starting material to be mixed or to be conched being capable of being fed into the conche vessel (12) which is open at the top, by means of a feed conveyor (11), and the mixed or conched chocolate mass being dischargeable from the bottom of the vessel, characterized by the following features:
a) the conched chocolate mass is preferably continuously dischargeable from the conche vessel (12) by means of a compulsory conveyor, especially by means of a screw conveyor (21),
b) the compulsory conveyor is connected to the cylindrical conche vessel (12) in the bottom region thereof via an outlet opening (38),
c) means which facilitate that the quantity of chocolate mass discharged from the conche vessel (12) by means of the compulsory conveyor corresponds to the quantity of starting material fed in by means of the feed conveyor (11).

10. The apparatus as claimed in claim 9, characterized in that a conveying means is arranged within the vessel which preferably rotates with the agitator or mixer, said conveying means transporting the conched chocolate mass into the outlet opening (38) to the screw conveyor (21).

11. The apparatus as claimed in claim 10, characterized in that the conveying means has a conveying web (41) inclined relative to a wall surface of the conche (10), and in that the mass is conveyable and pressable into the outlet opening (38) by means of said conveying web (41) as a result of the rotary movement.

12. The apparatus as claimed in claim 11, characterized in that the conveying web (41) is designed as a section of a blade-like or web-like scraper (42) which runs along the inside of the vessel wall with the agitator, especially with a rotor (14), said conveying web (41) being located in the region of the outlet opening (38) and sweeping over said outlet opening (38).

13. The apparatus as claimed in one of claims 9 to 12, characterized by a feed line, especially a lecithin line (23), for lecithin and/or cocoa butter, connected to the screw conveyor (21) from below.

14. The apparatus as claimed in one of claims 9 to 13, characterized in that the conched mass transported away by the screw conveyor (21) is transportable into a measuring vessel for determining the discharged quantity, especially into a balance vessel (28), the drive of the screw conveyor (21) and the infeed of lecithin or cocoa butter being controllable in response to the measured quantity.

15. The apparatus as claimed in one of claims 9 to 14, characterized in that the conched chocolate mass is transportable by the screw conveyor (21) into a mixing device (22) for mixing the conched mass with lecithin and/or cocoa butter.

16. The apparatus as claimed in claim 15, characterized in that the mixing device (22) is arranged in a cylindrical mixer housing (44) arranged transverse to the screw conveyor (21), and the conched mass is conveyable through the mixer housing (44) in the longitudinal direction.

17. The apparatus as claimed in claim 16, characterized in that, in the conveying direction of the chocolate mass, the mixing device (22) is followed by an intensive mixer, specifically a homogenizing device (52), preferably inside the common mixer housing (44).

18. The apparatus as claimed in claim 15, characterized in that the mixing device (22), consisting essentially of radial wings, rods (48) and fingers on a mixer shaft (46), and the intensive mixer, especially homogenizing device, consisting of blades or discs spaced at small distances and being directed cross-axially, are mounted on a common mixer shaft (46).

19. The apparatus as claimed in claim 16, characterized in that the housing of the screw conveyor (21) specifically a screw housing (39), and the mixer housing (44) are connected to one another to form a common housing, the axis of the screw conveyor (21) and the mixer shaft (46) crossing one another at a distance or extending offset to one another.

20. The apparatus as claimed in one of claims 9 to 19, characterized in that the outlet opening (38) in the sleeve of the conche (10) or the conche vessel (12) is designed elongate, especially oval, and extends with its longitudinal axis axis-parallel to the rotors (13, 14, 15) of the conche and in the longitudinal direction of the screw conveyor (21).

## Revendications

1. Procédé pour le conchage en continu de masse de chocolat dans une conche, dans laquelle la matière brute est introduite en continu et de laquelle la masse de chocolat conchée est prélevée en continu de manière correspondante, caractérisé en ce que la quantité de matière brute admise et/ou la quantité de masse de chocolat conchée, prélevée, sont déterminées, en particulier, par pesage et en ce que l'admission de matière brute et/ou la quantité de masse de chocolat conchée, prélevée, est ou encore sont ensuite contrôlées de telle manière que la quantité de masse de chocolat dans la conche est constante.

2. Procédé selon la revendication 1, caractérisé an ce que seule la quantité de masse de chocolat prélevée est déterminée, en particulier, par pesage et en ce qu'ensuite l'admission de matière brute est contrôlée.

3. Procédé selon la revendication 1, caractérisé an ce qu'une quantité constante de matière brute est admise en particulier en continu, laquelle est mesurée en fonction de la quantité de masse de chocolat conchée, prélevée et, ensuite, le prélèvement effectué en particulier en continu est contrôlé.

4. Procédé selon une des revendications 1 à 3, caractérisé en ce que la masse de chocolat conchée peut être évacuée par un organe d'acheminement sous contrainte transportant en continu, en particulier par une vis sans fin (21) dont l'entraînement est contrôlé en fonction de la quantité de masse de chocolat conchée, déchargée et mesurée .

5. Procédé selon la revendication 4, caractérisé en ce que la capacité maximale de transport de la vis sans fin (21) est plus grande que la quantité de matière brute admise en continu ou encore pendant une unité de temps et en ce que l'entraînement de la vis sans fin (21) peut être contrôlé de telle manière que la capacité globale de transport pendant une unité de temps correspond à la quantité de matière brute admise.

6. Procédé selon la revendication 1, caractérisé en ce que lors de l'admission d'une quantité prédéfinie de matière brute pendant une quelconque unité de temps, la sortie de matière pendant cette unité de temps est mesurée à chaque fois au cours de plusieurs fractions de l'unité de temps et la décharge est à chaque fois brièvement interrompue conformément à la mesure, de telle manière que la décharge globale pendant une unité de temps correspond à la quantité de matière brute admise.

7. Procédé selon la revendication 1, caractérisé en ce que la masse de chocolat conchée évacuée de la conche (10) peut être transportée dans un récipient de mesure, en particulier dans un bassin (28) de pesée, pour déterminer la quantité évacuée, le récipient de mesure ou encore une balance (29) de celui-ci étant reliée par des conduites (34, 36) de contrôle au transporteur d'évacuation, en particulier à la vis sans fin (21).

8. Procédé selon la revendication 1 ainsi que selon une ou plusieurs des autres revendications, caractérisé en ce que de la lécithine et, le cas échéant, du beurre de cacao sont ajoutés à la masse de chocolat conchée après la sortie de la conche (10), en particulier dans la région de la vis sans fin (21).

9. Appareil pour le mélange intime, notamment le conchage, d'ingrédients pour la fabrication de masse de chocolat dans un conteneur (12) de conchage ayant au moins un mécanisme brasseur ou encore mélangeur rotatif, la matière brute à mélanger ou encore à concher pouvant être introduite par un transporteur (11) d'alimentation par le dessus dans le conteneur (12) de conchage ouvert et la masse de chocolat mélangée ou encore conchée pouvant être évacuée dans la région inférieure, caractérisé par les caractéristiques suivantes:
a) la masse de chocolat conchée peut être évacuée de préférence en continu du conteneur (12) de conchage par un transporteur sous contrainte, en particulier par une vis sans fin (21),
b) le transporteur sous contrainte est connecté au conteneur (12) de conchage de forme cylindrique par une ouverture (38) de sortie située dans la région inférieure de ce conteneur,
c) des moyens qui permettent que la quantité de masse de chocolat évacuée du conteneur (12) de conchage par le transporteur sous contrainte corresponde à la quantité de matière brute apportée par le transporteur (11) d'alimentation.

10. Appareil selon la revendication 9, caractérisé en ce qu'un organe de transport tournant de préférence avec le mécanisme brasseur ou encore mélangeur est disposé à l'intérieur du conteneur, lequel organe transporte la masse de chocolat conchée dans l'ouverture (38) de sortie donnant accès à la vis sans fin (21).

11. Appareil selon la revendication 10, caractérisé en ce que l'organe de transport présente une réglette (41) de transport orientée obliquement par rapport à la surface de l'enveloppe de la conche (10), au moyen de laquelle la masse peut être transportée et pressée dans l'ouverture (38) de sortie à la suite du mouvement de rotation.

12. Appareil selon la revendication 11, caractérisé en ce que la réglette (41) de transport est conformée comme un segment d'un racloir (42) en forme de lamelle ou encore de réglette, qui se déplace avec le mécanisme brasseur, en particulier un rotor (14), le long de la paroi intérieure de l'enveloppe du conteneur, la réglette (41) de transport se trouvant dans la région de l'ouverture (38) de sortie et balayant celle-ci.

13. Appareil selon une des revendications 9 à 12, caractérisé par une conduite raccordée de préférence par en dessous à la vis sans fin (21), en particulier une conduite (23) de lécithine pour la lécithine et/ou le beurre de cacao.

14. Appareil selon une des revendications 9 à 13, caractérisé en ce que la masse de chocolat conchée évacuée par la vis sans fin (21) peut être transportée dans un récipient de mesure pour déterminer la quantité évacuée, en particulier dans un bassin (28) de pesée, l'entraînement de la vis sans fin (21) et l'admission de lécithine ou encore de beurre de cacao pouvant être contrôlée en fonction de la quantité mesurée.

15. Appareil selon une des revendications 9 à 14, caractérisé en ce que la masse de chocolat conchée peut être transportée par la vis sans fin (21) dans un dispositif (22) mélangeur destiné au mélange de la masse conchée avec de la lécithine et/ou du beurre de cacao.

16. Appareil selon la revendication 15, caractérisé en ce que le dispositif (22) mélangeur est disposé dans une cage (44) de mélangeur cylindrique disposée transversalement par rapport à la vis sans fin (21) et la masse conchée peut être transportée dans le sens longitudinal à travers la cage (44) du mélangeur.

17. Appareil selon la revendication 16, caractérisé en ce qu'un mélangeur intensif, notamment un homogénéisateur (52), est connecté au dispositif (22) mélangeur dans le sens de déplacement de la masse de chocolat, de préférence à l'intérieur de la cage (44) commune des mélangeurs.

18. Appareil selon la revendication 15, caractérisé en ce que le dispositif (22) mélangeur constitué essentiellement d'ailettes, de barres (48) et de doigts radiaux sur un arbre (46) de mélangeur et le mélangeur intensif, en particulier un homogénéisateur (52) constitué de lamelles ou encore de plaques faiblement écartées, orientées transversalement, sont montés sur un arbre (46) commun des mélangeurs .

19. Appareil selon la revendication 16, caractérisé en ce que la boîte de la vis sans fin (21), notamment un carter (39) de vis sans fin, et la cage (44) du mélangeur sont reliées l'une à l'autre pour former une cage commune, les axes de la vis sans fin (21) et de l'arbre (46) du mélangeur se croisant à distance l'un de l'autre ou encore se déplaçant de manière décalée l'un par rapport à l'autre.

20. Appareil selon une des revendications 9 à 19, caractérisé en ce que l'ouverture (38) de sortie dans l'enveloppe de la conche (10) ou encore du conteneur (12) de conchage est de forme allongée et en particulier de forme ovale et s'étend avec ses axes longitudinaux parallèlement aux axes des rotors (13, 14, 15) de la conche (10) et dans le sens longitudinal de la vis sans fin (21).
